# EUROPEAN PATENT APPLICATION

(11) **EP 2 700 335 A1**
(43) Date of publication of application: **26.02.2014**
(21) Application number: 12181121.0
(22) Date of filing: 21.08.2012
(51) Int. Cl.: A47F 3/04, A23G 9/22

(54) **A display counter for food products, such as ice-cream and the like**

(71) Applicant: Bocchini, Claudio, 60035 Jesi (AN) (IT)
(72) Inventor: Bocchini, Claudio, 60035 Jesi (AN) (IT)
(74) Representative: Baldi, Claudio

(57) **Abstract**

The present invention relates to a display counter (1) for food products (G), such as ice cream or the like, provided with front side (11), back side (12) and top (13), said display counter (1) comprising a plurality of compartments (20), each of them being provided with opening (21) defined by an upper edge (21'), said opening (21) being disposed on said top (13) and accessed from it, refrigeration systems to refrigerate the compartments (20), and a plurality of tubs (30) to contain food products (G), each of said tubs (30) being inserted in a compartment (20) in order to be refrigerated, and extracted from it, said display counter (1) being characterized in that the opening (21) of said compartments (20) is inclined and directed towards the back side (12).

## Description

The present invention relates to a display counter for food products, such as ice cream and the like.

More specifically, the invention relates to a display counter for ice-cream parlors, which has been developed and realized in particular to guarantee total comfort for operators and allow customers to see the products.

Whereas this description will be hereinafter dedicated in particular to a display counter for conservation and sale of ice cream and the like, it is evident that the same should not be considered as limited to such a specific use.

As it is known, display counters for ice-cream parlors are internally equipped with refrigeration, ventilation and defrosting systems, and are provided on top with a plurality of compartments, each of them containing a tub with ice cream.

A display case made of glass, Plexiglas or the like is provided in upper position, protecting the ice cream contained in tubs and allowing customers to see the products they want to buy.

A problem encountered with said type of display counter for ice-cream parlors is that ice cream is left in contact with air, thus impairing both the hygienic conditions and duration of the organoleptic properties of the product.

For these reasons, the display counters that were normally used some decades ago have been recently recovered, being composed of a lower base that contains the refrigeration, ventilation and defrosting systems in order to refrigerate a plurality of compartments disposed in upper position, each of them provided with a removable lid and containing a tub with ice cream.

In view of the above, the food products are protected against external agents and are not in contact with the surrounding air. However, in such a case, a problem is represented by the fact that customers are not able to see the food products. Considering that ice cream is mainly consumed in summer as refreshment against hot weather, it appears evident that the possibility to see the product before consumption is considered by the operators as a motivation for sale. Moreover, another problem with this type of display counters for ice- cream parlors is that said compartments for ice cream tubs are disposed in basically vertical position with respect to the work top. This forces operators to a very uncomfortable position in order to take the different ice cream flavors, and in particular the flavors that are positioned at the farthest distance from their body. During the working day operators are subject to frequent back pain and fatigue.

In view of the above, the purpose of the present invention is to devise a display counter for ice-cream parlors that protects the products to be sold against external agents and at the same time allows customers to see the products, while operators can maintain a correct position, with less fatigue.

These and other results are achieved by the invention with a display counter for ice-cream parlors provided with compartments for ice cream tubs that are inclined towards the operator and provided with a window, directed towards the customer, through which the customer can see the products contained in said tubs.

Therefore, the specific subject of the present invention is a display counter for food products, such as ice cream and the like, provided with a front side, a back side and a top, said counter comprising a plurality of compartments, each of them provided with opening defined by an upper edge, said opening being disposed on said top, and accessed from it, refrigeration systems to refrigerate said compartments, and a plurality of tubs to contain food products, each of said tubs being inserted into a corresponding compartment in order to be refrigerated, and extracted from it, said display counter being **characterized in that** the opening of said compartments is inclined and directed towards the back side.

Still according to the invention, said compartments can have a basically cylindrical shape, with inclined axis of symmetry so that the opening of said compartments is inclined and directed towards the back side.

Still according to the invention, the tubs can have a cylindrical shape.

Advantageously, according to the invention, each of said compartments can comprise a lid, disposed on the opening, and a hinge, adapted to hinge said lid to the compartment.

Moreover, according to the invention, said hinge can be disposed in such manner that the lid can be opened towards said front side or back side.

Still according to the present invention, each of said compartments comprise a window directed towards the front side.

Still according to the invention, said display counter can comprise at least one light source, preferably a LED (Light Emitting Diode) disposed in each of said windows of each compartment in order to provide backlight, said light source allowing customers to see the product contained in the tub.

Still according to the present invention, said display counter can comprise a display case above said top, which is open towards the back side.

The present invention will now be described for illustrative, yet not limitative purposes, according to its preferred embodiments, with special reference to the attached figures, wherein:
Figure 1 is a sectional side view of a first embodiment of a display counter for food products, in particular, for ice-cream parlors, according to the present invention;
Figure 2 is a view of the display counter for ice-cream parlors of Fig. 1, with lids open;
Figure 3 is a perspective view of the display counter for ice-cream parlors of Fig. 1 ;
Figure 4 is a sectional side view of a second embodiment of a display counter for ice-cream parlors according to the present invention;
Figure 5 is a view of the display counter for ice-cream parlors of Fig. 4, with lids open; and
Figure 6 is a perspective view of the display counter for ice-cream parlors of Fig. 4.

In the figures similar parts are indicated with the same numerals.

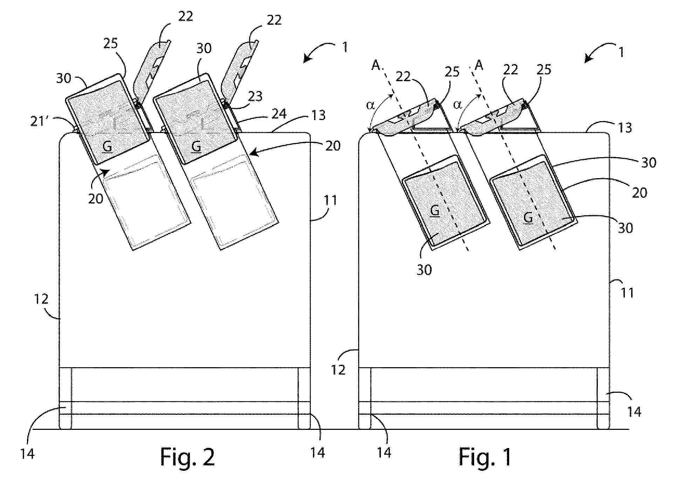

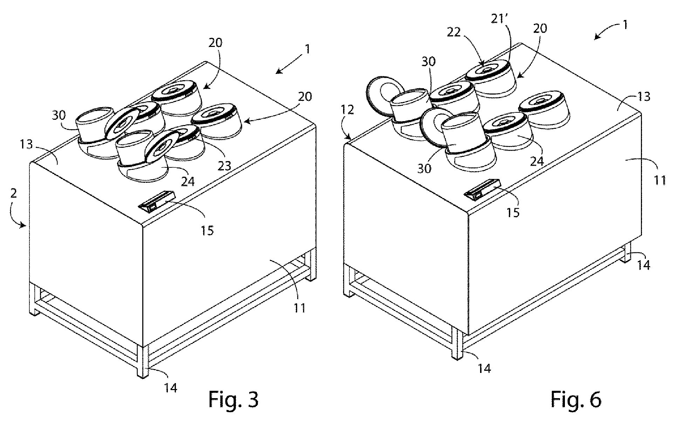

Figs. 1-3 show a display counter for food products 1, in particular for ice-cream parlors, with front sides 11, back sides 12 and tops 13. Said display counter 1 is provided in lower position with supports or feet 14. Refrigerating, ventilation and defrosting systems are installed inside said display counter 1 and electrically powered.

Said display counter 1 comprises a plurality of compartments 20 with cylindrical shape, each of them being provided in upper position with an opening 21 that can be accessed from said top 13.

A cylindrical tub 30 can be inserted in each of said compartments 20 to contain a food product G, such as ice cream and the like. Said refrigerating systems maintain the internal space of said compartments 20 at a suitable temperature in order to preserve the ice cream G contained in said tubs 30.

Said tubs 30 can be inserted into and extracted from the corresponding compartment 20.

The axis of symmetry A of each compartment 20 forms an angle α lower than 90° with the surface of said top 13, in such manner that the opening 21 defined by the upper edge 21' of each compartment 20 is inclined and directed towards the back side 12. According to the present embodiment, in particular, as shown in the figures, each compartment 20 is inclined towards the back side 12.

Each of said compartments 20 comprises a lid 22 hinged with a hinge 23 on the edge 21' of the compartment 20.

Moreover, each compartment 20 comprises a window 24 made of Plexiglas, glass or any other transparent material, directed towards said front side 11, through which it is possible to see the inside of said compartment 20, and in particular the contents of the tubs 30 contained in each compartment 20.

Said window 24 is provided with backlight by means of a light source 25, preferably a LED (Light Emitting Diode).

Finally, a digital temperature display 15 is provided on said top 13 of said display counter 1.

With the display counter for ice-cream parlors 1 of the invention, the operator stands behind the back side 12, whereas the customer stands on the front side 11. Because of the window 24 and the backlight generated by the LEDs 25 on each compartment 20, the customer can see the ice cream G contained in the tubs 30.

After opening the lid 22 of each compartment 20 to take the ice-cream G contained in the tub 30, the operator can stand in upright position, without excessively bending forwards, thus reducing stress on dorsal muscles and arms.

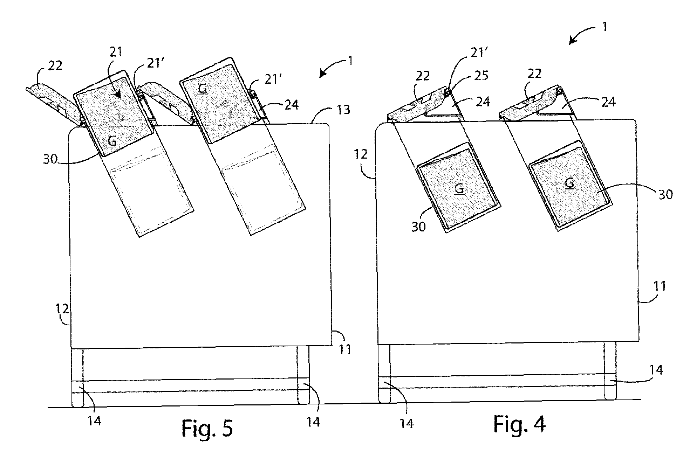

A second embodiment of the present invention is shown in Figs. 4-6, wherein the hinge 23 joins said lid 22 on the edge 21' of the compartment 20 directed towards the back side 12. In view of the above, when the lid 22 is open, food drops can be collected on the internal surface of the lid 22, thus avoiding getting the top 13 dirty and ensuring better hygienic and cleaning conditions.

Finally, a display case (not shown in the figures) can be provided above said top 13, and said display counter can be integrated into any type of furnishings for bars, ice-cream parlors and the like.

Although the present invention has been described for illustrative, not limitative purposes according to its preferred embodiments, it is understood that variations and/or modifications can be made by an expert of the field without leaving the protection scope of the attached claims.

## Claims

1. A display counter (1) for food products (G), such as ice cream and the like, provided with a front side (11), a back side (12) and a top (13), said counter (1) comprising a plurality of compartments (20), each of them being provided with opening (21) defined by an upper edge (21'), said opening (21) being disposed on said top (13), from which it can be accessed, refrigeration systems adapted to refrigerate said compartments (20), and a plurality of tubs (30) adapted to contain said food products (G), each of said tubs (30) being inserted into a corresponding compartment (20) to be refrigerated and extracted from it,
said display counter (1) being **characterized in that** the opening (21) of said compartments (20) is inclined and directed towards the back side (12).

2. The display counter (1) of claim 1, **characterized in that** said compartments (20) have a basically cylindrical shape and the axis of symmetry of each of said compartments (20) is inclined so that the opening (21) of said compartments (20) is inclined and directed towards the back side (12).

3. The display counter (1) of any one of the preceding claims, **characterized in that** said tubs (30) have a cylindrical shape.

4. The display counter (1) of any one of the preceding claims, **characterized in that** each of said compartments (20) comprises a lid (22) disposed on the opening (21), and a hinge (23), adapted to hinge said lid to the compartment (20).

5. The display counter (1) of claim 4, **characterized in that** said hinge (23) is disposed in such manner that said lid (22) can be opened towards the front side (11) or the back side (12).

6. The display counter (1) of any one of the preceding claims, **characterized in that** each of said compartments (20) comprises a window (24) directed towards the front side (11).

7. The display counter (1) of claim 6, **characterized in that** it comprises at least one light source (25), preferably a LED (Light Emitting Diode) disposed in each of said windows (24) of each compartment (20) in order to provide backlight, said light source (23) allowing to see the product contained in the tub (30).

8. The display counter (1) of any one of the preceding claims, **characterized in that** it comprises a display case disposed above said top (13) and opened towards the back side (12).
